# EUROPEAN PATENT APPLICATION

(11) **EP 3 544 304 A1**
(43) Date of publication of application: **25.09.2019**
(21) Application number: 17872092.6
(22) Date of filing: 07.11.2017
(51) Int. Cl.: H04N 21/235, H04N 19/597, H04N 19/70, H04N 21/435, H04N 21/218, H04N 5/232, H04N 21/2365, H04N 21/431, H04N 21/434, H04N 21/81, H04N 21/845

(54) **TRANSMISSION DEVICE, TRANSMISSION METHOD, RECEPTION DEVICE, AND RECEPTION METHOD**

(30) Priority: 15.11.2016 JP 2016222060
(71) Applicant: Sony Corporation, Tokyo 108-0075 (JP)
(72) Inventor: TSUKAGOSHI, Ikuo, Tokyo 108-0075 (JP)
(74) Representative: 2SPL Patentanwälte PartG mbB
(86) International application number: PCT/JP2017/040150
(87) International publication number: WO 2018/092642

(57) **Abstract**

It is made possible to reduce processing burdens on a receiving side in image synthesizing process.

An encoded stream of encoded image data of a plurality of views that can be synthesized is transmitted. Information about synthesis points are inserted into the encoded image data of each of the views. For example, the synthesis points include a reference point and a non-reference point to be used upon synthesis. Further, for example, the information about synthesis points is represented by x coordinates and y coordinates with an origin being located at a top-left corner of an image.

## Description

### [Technical Field]

The present technology relates to a transmitting apparatus, a transmitting method, a receiving apparatus, and a receiving method, and more particularly to a transmitting apparatus and so on for transmitting an encoded stream of encoded image data representing a plurality of views that can be synthesized.

### [Background Art]

PTL 1, for example, describes stitching and synthesizing a plurality of images into a panoramic image that reproduces a wide field of vision. In a case in which an encoded stream of encoded image data representing a plurality of views that can be synthesized is sent to a receiving side, the receiving side needs an algorithm for stitching the image data of the plurality of views to a nicety in order to display a synthesized image. Synthesis positions are determined by moving the images one pixel at a time and taking and comparing correlated pixel values at each of the image positions. Since the process of stitching image data of a plurality of views highly accurately involves the process of determining synthesis positions, the processing burdens on the receiving side are heavy.

### [Citation List]

### [Patent Literature]

[PTL 1] Japanese Patent Laid-open No. 2000-299804

### [Summary]

### [Technical Problem]

It is an object of the present technology to make it possible to reduce the processing burdens of an image synthesizing process on a receiving side.

### [Solution to Problem]

A concept of the present technology resides in a transmitting apparatus including: a transmitter that transmits an encoded stream of encoded image data of a plurality of views that can be synthesized; and an information inserter that inserts information about synthesis points into the encoded image data of each of the views.

According to the present technology, the transmitter transmits an encoded stream of encoded image data of a plurality of views that can be synthesized. The information inserter inserts information about synthesis points into the encoded image data of each of the views. For example, the synthesis points may include a reference point and a non-reference point to be used upon synthesis. Further, for example, the information about synthesis points may be represented by x coordinates and y coordinates with an origin being located at a top-left corner of an image.

According to the present technology, as described above, the information about synthesis points is inserted into encoded image data of each view and the encoded image data with the inserted information are transmitted. The receiving side is thus able to perform synthesizing process based on the information about synthesis points, so that processing burdens on the receiving side can be reduced.

Note that, for example, according the present technology, information identifying each of the views may be added to each piece of the information about synthesis points that are inserted into the encoded image data of each of the views. Therefore, the receiving side is able to identify each view with ease.

Furthermore, for example, according to the present technology, information indicating whether a view is a master view or not may be added to each piece of the information about synthesis points that are inserted into the encoded image data of each of the views. Therefore, the receiving side is able to select an area corresponding to the master view as a partial area, of a synthesized image, to be displayed as a default view.

Furthermore, for example, according to the present technology, information indicating a set of synthesis views may be added to each piece of the information about synthesis points that are inserted into the encoded image data of each of the views. Therefore, the receiving side is able to obtain a desired synthesized image by designating the set of synthesis views.

Furthermore, another concept of the present technology resides in a receiving apparatus including: a receiver that receives an encoded stream of encoded image data of a plurality of views that can be synthesized; the encoded image data of each of the views having information about synthesis points inserted therein; and a synthesizer that synthesizes image data of a predetermined number of views selected from the plurality of views, based on the information about synthesis points, thereby producing synthesized image data.

According to the present technology, the receiver receives an encoded stream of encoded image data of a plurality of views that can be synthesized. The information about synthesis points has been inserted in the encoded image data of each of the views. The synthesizer synthesizes image data of a predetermined number of views selected from the plurality of views, based on the information about synthesis points, thereby producing synthesized image data.

In this manner, according to the present technology, the image data of the predetermined number of views selected from the plurality of views are synthesized based on the information of synthesis points inserted in the encoded image data of the respective views and transmitted therewith. Therefore, processing burdens can be reduced.

Note that, for example, according to the present technology, information indicating a set of synthesis views may be added to each piece of the information about synthesis points that are inserted into the encoded image data of each of the views, and the synthesizer may synthesize image data of views belonging to a set designated by the designation information indicating the set of synthesis views. Therefore, the receiving side is able to obtain a desired synthesized image by designating the set of synthesis views.

Furthermore, for example, according to the present technology, the receiving apparatus may further include a display processor that selectively extracts image data of a partial area from the synthesized image data, thereby producing display image data. An image of a partial area of a synthesized image can thus selectively be displayed.

In this case, for example, the receiving apparatus may further include an operation unit that allows a user to manipulate the partial area. Therefore, the user can adjust a display area in the synthesized image as desired. In this case, for example, the receiving apparatus may superpose display data indicative of a position of the extracted partial area in the synthesized image, on the display image data. Consequently, the user can easily recognize the position of the display area in the synthesized image.

Furthermore, for example, according to the present technology, information indicating whether a view is a master view or not may have been added to each piece of the information about synthesis points that are inserted into the encoded image data of each of the views. The display processor may extract image data of an area of the master view from the synthesized image data, thereby producing display image data by default. Therefore, an image of a master view of the synthesized image can be displayed by default.

### [Advantageous Effect of Invention]

According to the present technology, it is possible to reduce processing burdens on the receiving side in the image synthesizing process. Note that the advantage referred to above is not necessarily restrictive, but any of the advantages described in the present disclosure are also applicable.

### [Brief Description of Drawings]

FIG. 1 is a block diagram illustrating a configurational example of a transmitting and receiving system according to an embodiment.
FIG. 2 is a block diagram illustrating a configurational example of a transmitting apparatus.
FIG. 3 is a diagram illustrating a structural example of a stitching data SEI message.
FIG. 4 is a diagram illustrating contents of major information in the structural example of the stitching data SEI message.
FIG. 5 is a diagram illustrating by way of example a sequence of encoded image data of N views.
FIG. 6 is a block diagram illustrating a configurational example of a receiving apparatus.
FIG. 7 is a diagram illustrating an identified example of a set of synthesis views according to a value of information "tier."
FIG. 8 is a diagram illustrating by way of example an image of a view 1, a view 2, and a view 3 belonging to a set of synthesis views designated by "tier1."
FIG. 9 is a diagram illustrating an example of a result of synthesizing processes.
FIG. 10 is a diagram illustrating an example of a positional relation of master point M1 and target point T1 as synthesis points included in the view 1 and the view 2.
FIG. 11 is a diagram illustrating an example of a sequence of a synthesizing process.
FIG. 12 is a diagram illustrating an example of a sequence of the synthesizing process.
FIG. 13 is a diagram illustrating a flow of the synthesizing process carried out by an image synthesis/display selector.
FIG. 14 is a diagram illustrating by way of example a manner in which an overall synthesized image (synthesis views) is displayed on a display.
FIG. 15 is a diagram illustrating by way of example a manner in which a partial area of a synthesized image (synthesis view) is displayed based on user interaction.

### [Description of Embodiments]

A mode for carrying out the invention (hereinafter referred to an "embodiment") will be described below. Note that the following items will be described in the order named:
1. Embodiment
2. Modifications

### <1. Embodiment>

### [Transmitting and receiving system]

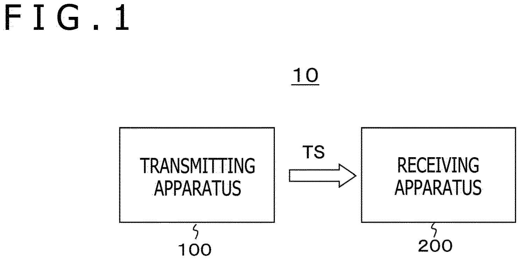

FIG. 1 illustrates a configurational example of a transmitting and receiving system 10 according to an embodiment. The transmitting and receiving system 10 has a transmitting apparatus 100 and a receiving apparatus 200.

The transmitting apparatus 100 transmits a transport stream TS as a container carried on a broadcasting wave. The transport stream TS includes an encoded stream (video stream) of encoded image data representing a plurality of views that can be synthesized. In this case, the encoded stream may be a single encoded stream or a plurality of encoded streams.

The encoded image data of each view have information about synthesis points inserted therein. Since information about synthesis points is inserted in the encoded image data of each view in this manner, the receiving side is able to perform a synthesizing process based on the information about synthesis points, and processing burdens thereon are reduced.

Two or more synthesis points exist in the image of each view. The synthesis points include a reference point that serves as a reference to be used upon synthesis and a non-reference point other than the reference point. The reference point will hereinafter be referred to as "master point" and the non-reference point as "target point." Information about a synthesis point is represented by x coordinates "x_coordinate" and y coordinates "y_coordinate" with the origin being located at the top-left corner of the image, for example.

To each piece of the information about synthesis points inserted in the encoded image data of each view, there is added information "view_id" that identifies the view. Since information that identifies each view is added in this manner, the receiving side is able to identify the view with ease.

To each piece of the information about synthesis points inserted in the encoded image data of each view, furthermore, there is added information "masterview_flag" that indicates whether the view is a master view or not. Since information that indicates whether the view is a master view or not is added in this manner, the receiving side is able to select an area corresponding to the master view as a partial area, of a synthesized image, to be displayed as a default view.

To each piece of the information about synthesis points inserted in the encoded image data of each view, moreover, there is added information "tier" that indicates a set of synthesis views. Since information that indicates a set of synthesis views is added in this manner, the receiving side is able to obtain a desired synthesized image by designating the set of synthesis views.

The receiving apparatus 200 receives the transport stream TS carried on the broadcasting wave and transmitted from the transmitting apparatus 100. As described above, the transport stream TS includes an encoded stream (video stream) of encoded image data representing a plurality of views that can be synthesized. Information about synthesis points is inserted in the encoded image data of each view.

The receiving apparatus 200 obtains synthesized image data by synthesizing image data of a predetermined number of views selected from the plurality of views based on the information about synthesis points. For example, the receiving apparatus 200 synthesizes image data of views that belong to a set designated by the information that designates the set of synthesis views. The set of synthesis views is designated by a user's operation, for example.

The receiving apparatus 200 obtains display image data by selectively extracting a partial area from synthesized image data, e.g., image data commensurate with the image size of one view. The image of a partial area of a synthesized image is thus selectively displayed. By default, for example, based on the information of a master view, the image data of the area of the master view is extracted, and the image of the master view is displayed. The partial area is adjusted by a user's operation, for example. In this case, for example, the receiving apparatus 200 displays the position of the extracted partial area in the synthesized image on the displayed image for the user's convenience.

### "Configuration of the transmitting apparatus"

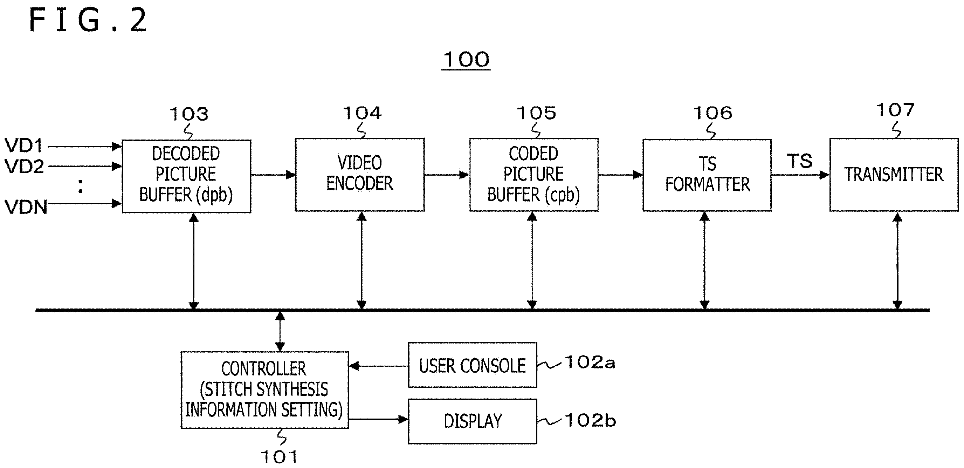

FIG. 2 illustrates a configurational example of the transmitting apparatus 100. The transmitting apparatus 100 has a controller 101, a user operation unit 102a, a display 102b, a decoded picture buffer (dpb) 103, a video encoder 104, a coded picture buffer (cpb) 105, a TS formatter 106, and a transmitter 107.

The controller 101 includes a CPU (Central Processing Unit) and controls operation of various components of the transmitting apparatus 100. The user operation unit 102a and the display 102b, which function as user interfaces, are connected to the controller 101. The user can operate the user operation unit 102a to enter various inputs. For example, the user can operate the user operation unit 102a to set stitch synthesis information. The stitch synthesis information includes information about synthesis points (master points and target points), view identifying information, master view information, synthesis view set information, etc.

The video encoder 104 receives moving image data VD1, VD2, ···, VDN of a plurality of views, or N views, that can be synthesized which are input through the decoded picture buffer 103, and encodes the input moving image data according to AVC or HEVC to obtain an encoded stream (video stream) of encoded image data of the respective views. In this case, the encoded stream may be a single encoded stream or a plurality of encoded streams.

At this time, the video encoder 104 inserts stitch synthesis information into the encoded image data of each view. Specifically, the video encoder 104 inserts a newly defined stitching data SEI message (Stitching_data SEI message) having stitch synthesis information into "SEIs" of each access unit (AU) having encoded image data per picture.

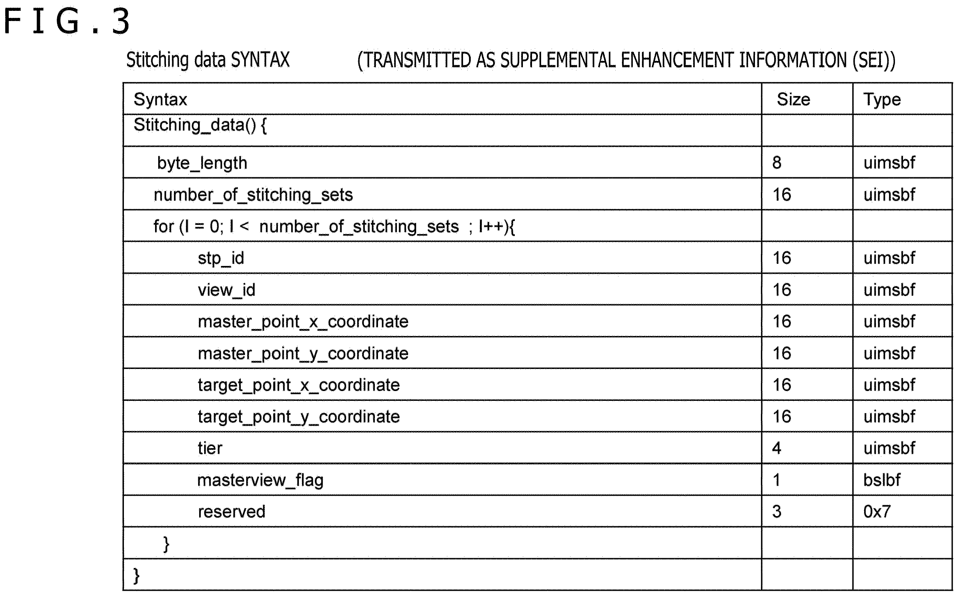

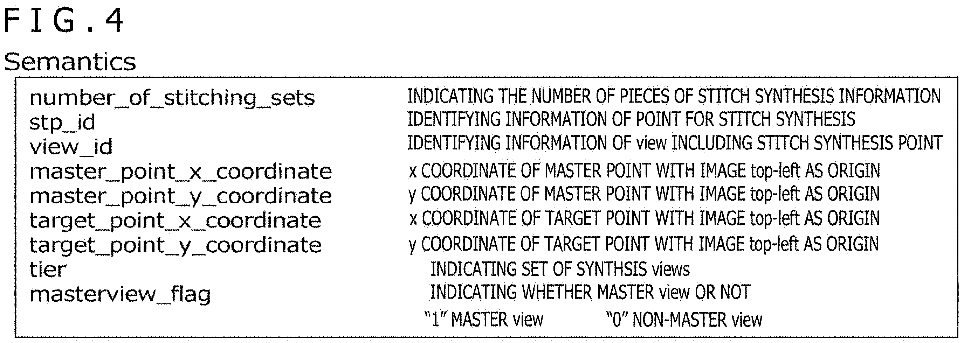

FIG. 3 illustrates a structural example (Syntax) of a stitching data SEI message. FIG. 4 illustrates contents (Semantics) of major information in the structural example of the stitching data SEI message. An 8-bit field "byte_length" indicates subsequent sizes in the SEI message in terms of the numbers of bytes. A 16-bit field "number_of_stitching_sets" indicates the number of pieces of stitch synthesis information. As many fields, to be described below, as the number are repeatedly present.

A 16-bit field "stp_id" indicates identifying information that identifies a point to be stitch-synthesized (synthesis point). A 16-bit field "view_id" indicates identifying information that identifies a view that includes a stitch synthesis point.

A 16-bit field "master_point_x_coordinate" indicates the x-coordinate of a master point with the origin being located at the top-left corner of an image. A 16-bit field "master_point_y_coordinate" indicates the y-coordinate of a master point with the origin being located at the top-left corner of an image. A 16-bit field "target_point_x_coordinate" indicates the x-coordinate of a target point with the origin being located at the top-left corner of an image. A 16-bit field "target_point_y_coordinate" indicates the y-coordinate of a target point with the origin being located at the top-left corner of an image.

A 4-bit field "tier" indicates a set of synthesis views. A 1-bit field "masterview_flag" indicates whether a view including a stitch synthesis point is a master view or not. For example, "1" indicates that the view is a master view, and "0" indicates that the view is not a master view.

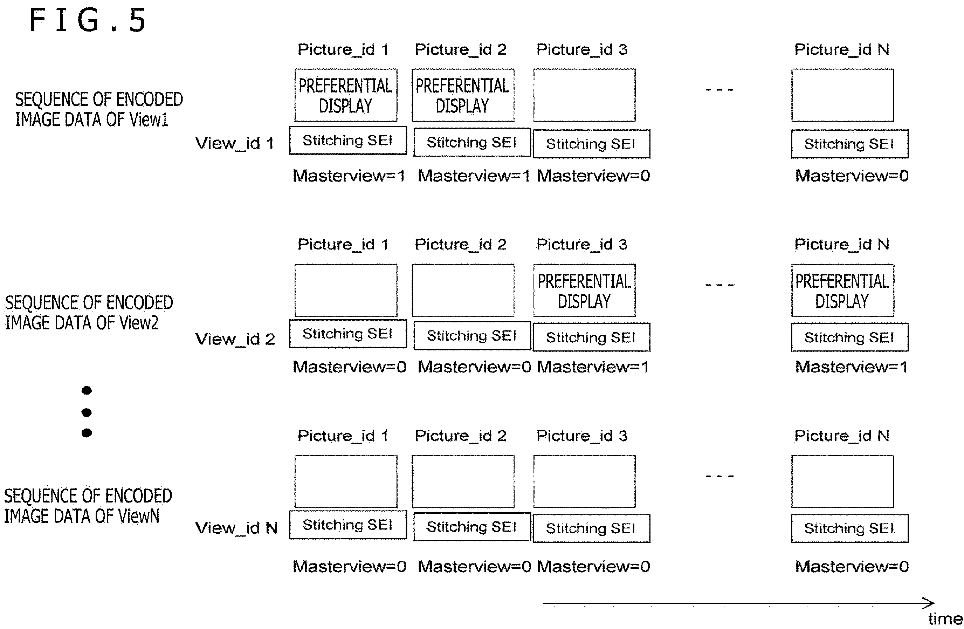

FIG. 5 illustrates by way of example a sequence of encoded image data of N views. A stitching data SEI message referred to above is inserted in the encoded image data (access unit) of each picture, respectively. In the illustrated example, with respect to a first picture and a second picture, stitch synthesis information inserted in the encoded image data of a view 1 (View1) represents "Masterview = 1," setting the view 1 as a master view.

Furthermore, with respect to third and subsequent pictures, stitch synthesis information inserted in the encoded image data of a view 2 (View2) represents "Masterview = 1," setting the view 2 as a master view. In a case in which a partial area of a synthesized image is to be selectively displayed, a master view is preferentially displayed by default, as described later.

Referring back to FIG. 2, the coded picture buffer (cpb) 105 temporarily stores an encoded stream generated by the video encoder 104. The TS formatter 106 reads the encoded stream stored in the coded picture buffer 104, converts the encoded stream into PES packets, then converts the PES packets into transport packets, and multiplexes the transport packets into a transport stream TS as a multiplexed stream. The transmitter 107 transmits the transport stream TS obtained by the TS formatter 106, by carrying it on a broadcasting wave or Web packets, to the receiving apparatus 200.

Operation of the transmitting apparatus 100 illustrated in FIG. 2 will briefly be described below. Moving image data VD1, VD2, ···, VDN of N views that can be synthesized are supplied through the decoded picture buffer (dpb) 103 to the video encoder 104. The video encoder 104 encodes each of the moving image data VD1, VD2, ···, VDN according to AVC or HEVC or the like, thereby producing an encoded stream (video stream).

Furthermore, the video encoder 104 also inserts stitch synthesis information including information about synthesis points (master points and target points), view identifying information, master view information, synthesis view set information, etc. into encoded image data of each view. Specifically, the video encoder 104 inserts a stitching data SEI message (see FIG. 3) having stitch synthesis information into "SEIs" of each access unit (AU).

The encoded stream generated by the video encoder 104 is temporarily stored in the coded picture buffer (cpb) 105. In the TS formatter 106, the encoded stream stored in the coded picture buffer 105 is read and converted into PES packets, the PES packets are converted into transport packets, and the transport packets are multiplexed into a transport stream TS as a multiplexed stream.

The transport stream TS obtained by the TS formatter 106 is sent to the transmitter 107. The transport stream TS obtained by the TS formatter 106 is carried on a broadcasting wave or Web packets by the transmitter 107, and transmitted from the transmitter 107 to the receiving apparatus 200.

### "Configuration of the receiving apparatus"

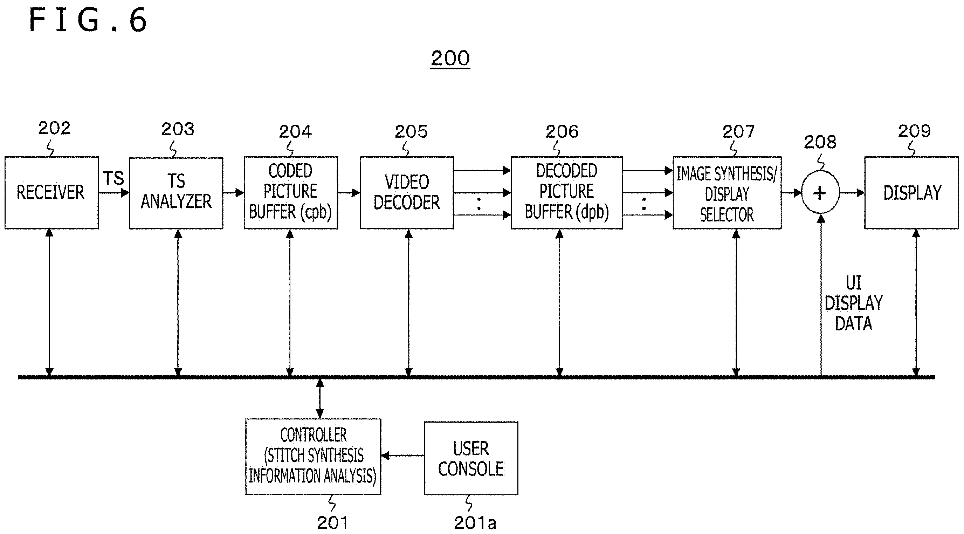

FIG. 6 illustrates a configurational example of the receiving apparatus 200. The receiving apparatus 200 has a controller (Central Processing Unit) 201, a user operation unit 201a, a receiver 202, a TS analyzer 203, a coded picture buffer (cpb) 204, a video decoder 205, a decoded picture buffer (dpb) 206, an image synthesis/display selector 207, a synthesizer 208, and a display 209.

The controller 201 includes a CPU (Central Processing Unit) and controls operation of various components of the receiving apparatus 200. The user operation unit 201a, which functions as a user interface, is connected to the controller 201. The user can operate the user operation unit 201a to enter various inputs. For example, if the receiving side is capable of selecting a partial area to be displayed from a synthesized image, then the user can operate the user operation unit 201a to select such a partial area.

The receiver 202 receives a transport stream TS transmitted from the transmitting apparatus 100, which is carried on a broadcasting wave or Web packets. The TS analyzer 203 extracts an encoded stream (encoded image data of each view) included in the transport stream TS from the transport stream TS, and sends the extracted encoded stream to the coded picture buffer (cpb) 204.

The video decoder 205 decodes encoded image data of all views or encoded image data of each view belonging to a set of synthesis views designated by the user from the user operation unit 201a, depending on the decoding capability of the receiving apparatus 200. The set of synthesis views is designated by setting the value of information "tier" to a predetermined value. In this case, whether a view belongs to the designated set of synthesis views is determined based on whether the view has a synthesis point related to the set value of the information "tier" or not.

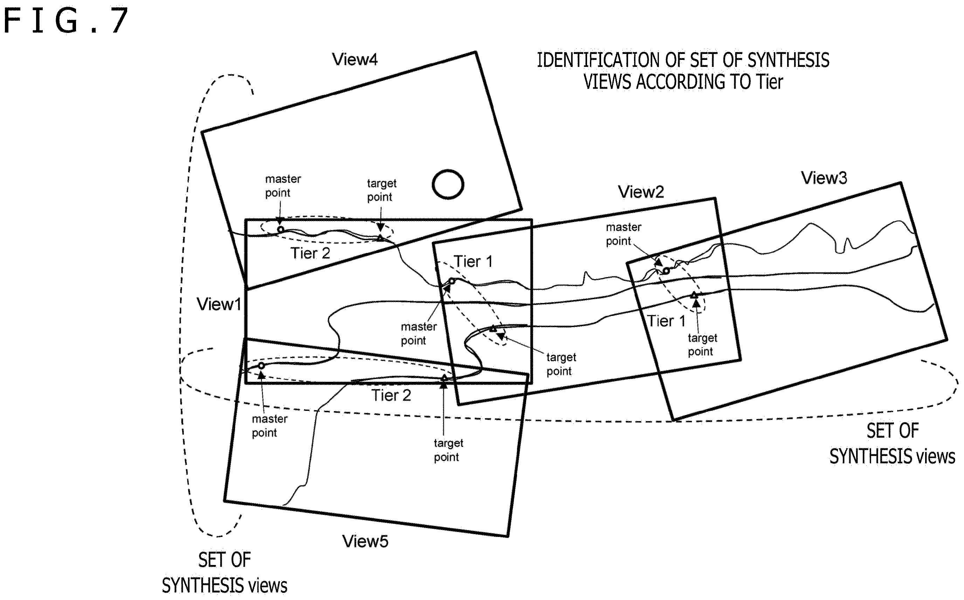

FIG. 7 illustrates an identified example of a set of synthesis views according to the value of information "tier." Note that this example represents a state in which the images of views have already been synthesized based on the information of synthesis points (master points and target points). For example, if a set of synthesis views is designated by setting the value of information "tier" to "tier1," then since each of the view 1 (view1), the view 2 (view2), and the view 3 (view3) has synthesis points related to "tier1," these views belong to the designated set of synthesis views. Furthermore, for example, if a set of synthesis views is designated by setting the value of information "tier" to "tier2," then since each of the view 1 (view1), the view 4 (view4), and the view 5 (view5) has synthesis points related to "tier2," these views belong to the designated set of synthesis views.

The video decoder 205 reads and decodes the encoded image data of each picture in each view stored in the coded picture buffer 204 at a decoding timing given by the DTS (Decoding Time Stamp) of the picture, respectively. The decoded image data of each picture in each view are temporarily stored in the decoded picture buffer 206. The image data of each picture are read from the decoded picture buffer 206 at a timing given by the PTS (Presentation Time Stamp) of the picture, producing moving image data VD of each view, which are sent to the image synthesis/display selector 207.

The video decoder 205 also extracts parameter sets and SEI messages inserted in the video stream and sends the extracted parameter sets and SEI messages to the controller 201. The extracted information also includes a stitching data SEI message referred to above (see FIG. 3) inserted in the access unit of the encoded image data of each view. The controller 201 thus recognizes the stitch synthesis information of each view. As described above, the stitch synthesis information includes information about synthesis points (master points and target points), view identifying information, master view information, synthesis view set information, etc.

The image synthesis/display selector 207 performs a synthesizing process on the image data of each view obtained from the decoded picture buffer 206 to obtain synthesized image data. According to the synthesizing process, the image synthesis/display selector 207 synthesizes the image data by superposing synthesis points having identical identifying information "stp_id." At this time, the image synthesis/display selector 207 rotates or scales the image data, if necessary, with respect to the master points serving as references such that the target points are superposed one on the other, in synthesizing the image data.

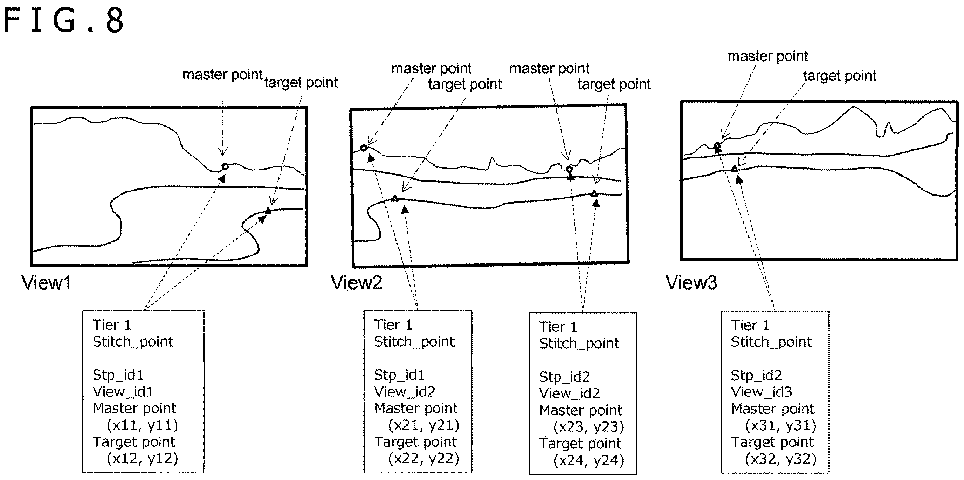

FIG. 8 illustrates by way of example an image of the view 1 (view1), the view 2 (view2), and the view 3 (view3) belonging to a set of synthesis views designated by "tier1" in FIG. 7 referred to above. The stitch synthesis information of the view 1 includes various pieces of information about synthesis points identified by "stp_id1." It is indicated here by "view_id1" that the synthesis points are included in the view 1. It is also indicated that the master point has coordinates (x11, y11). It is also indicated that the target point has coordinates (x12, y12).

The stitch synthesis information of the view 2 includes various pieces of information about synthesis points identified by "stp_id1." It is indicated here by "view_id2" that the synthesis points are included in the view 2. It is also indicated that the master point has coordinates (x21, y21). It is also indicated that the target point has coordinates (x22, y22).

Furthermore, the stitch synthesis information of the view 2 includes various pieces of information about synthesis points identified by "stp_id2." It is indicated here by "view_id2" that the synthesis points are included in the view 2. It is also indicated that the master point has coordinates (x23, y23). It is also indicated that the target point has coordinates (x24, y24).

The stitch synthesis information of the view 3 includes various pieces of information about synthesis points identified by "stp_id2." It is indicated here by "view_id3" that the synthesis points are included in the view 3. It is also indicated that the master point has coordinates (x31, y31). It is also indicated that the target point has coordinates (x32, y32).

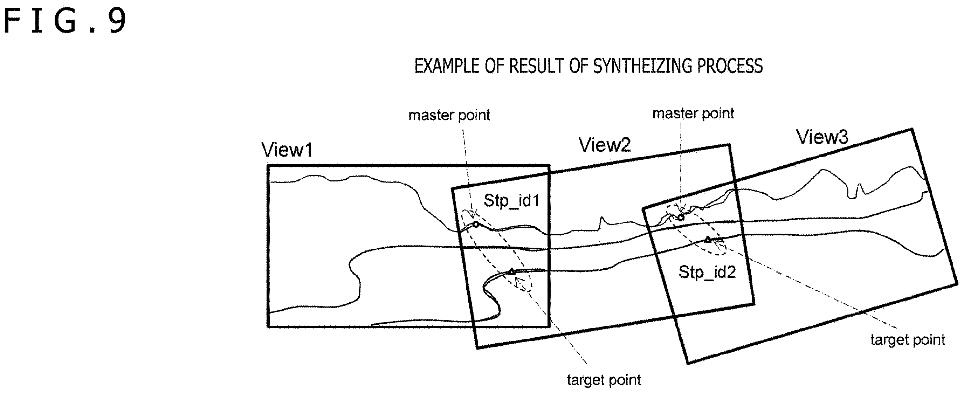

According to a synthesizing process for synthesizing the view 1 and the view 2, the image data are synthesized by superposing the synthesis points identified by "stp_id1" (master points and target points). Furthermore, according to a synthesizing process for synthesizing the view 2 and the view 3, the image data are synthesized by superposing the synthesis points identified by "stp_id2" (master points and target points). In this manner, synthesized image data are obtained by synthesizing the image data of the view 1, the view 2, and the view 3. FIG. 9 illustrates an example of the result of the synthesizing processes.

A sequence of a synthesizing process will be described below. Hereinafter, the synthesizing process for synthesizing the view 1 and the view 2 will be described by way of example. In this case, the synthesizing process is carried out using the synthesis points (master points and target points) identified by "stp_id1" included in the view 1 and the view 2.

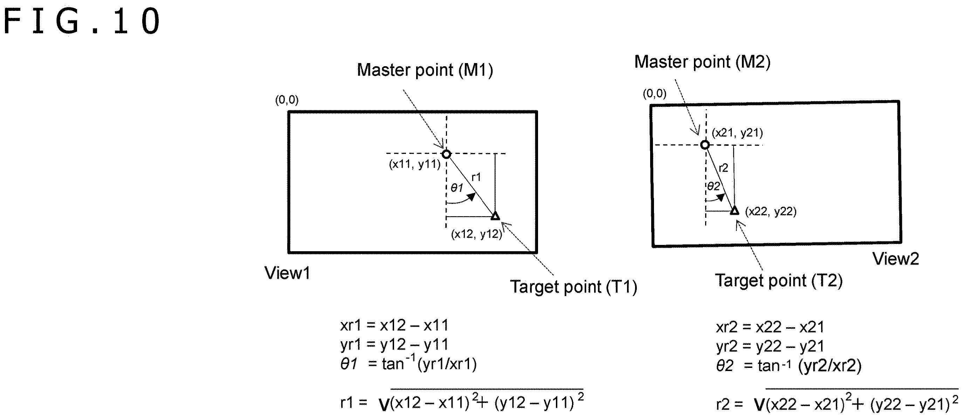

FIG. 10(a) illustrates an example of the positional relation between a master point M1 and a target point T1 that are synthesis points included in the view 1. The master point M1 has coordinates (x11, y11), whereas the target point T1 has coordinates (x12, y12). The target point T1 is in a position that has been rotated from a vertical axis by θ1 about the master point M1 as a base point. Furthermore, the distance between the master point M1 and the target point T1 is represented by r1.

FIG. 10(b) illustrates an example of the positional relation between a master point M2 and a target point T2 that are synthesis points included in the view 2. The master point M2 has coordinates (x21, y21), whereas the target point T2 has coordinates (x22, y22). The target point T2 is in a position that has been rotated from a vertical axis by θ2 about the master point M2 as a base point. Furthermore, the distance between the master point M2 and the target point T2 is represented by r2. Note that it is assumed here that θ2 < θ1 and r2 > r1.

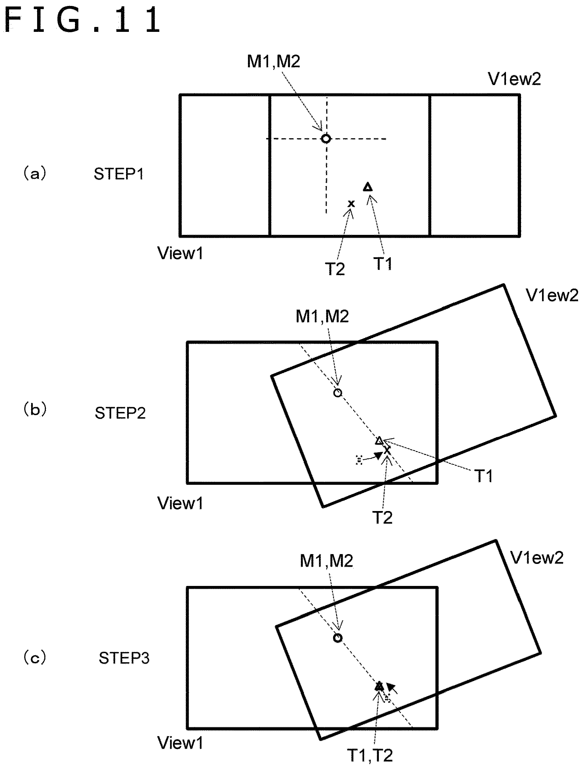

In step 1, as illustrated in FIG. 11(a), a process of setting the positions of the two views (images) is carried out for superposing the coordinates of the master point M1 of the view 1 and the master point M2 of the view 2. With the positions being thus set, the coordinates of the master points M1 and M2 are superposed, but the coordinates of the target point T1 of the view 1 and the coordinates of the target point T2 of the view 2 are not superposed because θ2 < θ1 and r2 > r1 as described above.

In subsequent steps, a process of setting positions is further performed for superposing the coordinates the target points T1 and T2. Note that, in the case of θ2 = θ1 and r2 = r1, as the coordinates of the target points T1 and T2 are superposed in step 1, the process of setting the positions of the two views (images) comes to an end.

In step 2, as illustrated in FIG. 11(b), the view 2 is rotated about the master point M2 by θ1 - θ2) in a first stage for superposing the coordinates of the target point T1 of the view 1 and the coordinates of the target point T2 of the view 2. The target point T2 of the view 2 is now located in a position on an extension of the line interconnecting the master points M1 and M2 and the target point T1 of the view 1. Note that, conversely, in the first stage, the view 1 may be rotated about the master point M1 by -θ1 - θ2).

In step 3, as illustrated in FIG. 11(c), the view 2 is scaled with respect to the master point M1 or M2 for superposing the target point T2 of the view 2 on the target point T1 of the view 1 in a second stage for superposing the coordinates of the target point T1 of the view 1 and the coordinates of the target point T2 of the view 2. The distance between the master point M2 and the target point T2 of the view 2 is now equal to the distance r1 between the master point M1 and the target point T1 of the view 1. Note that, conversely, in the second stage, the view 1 may be scaled for superposing the target point T1 of the view 1 on the target point T2 of the view 2.

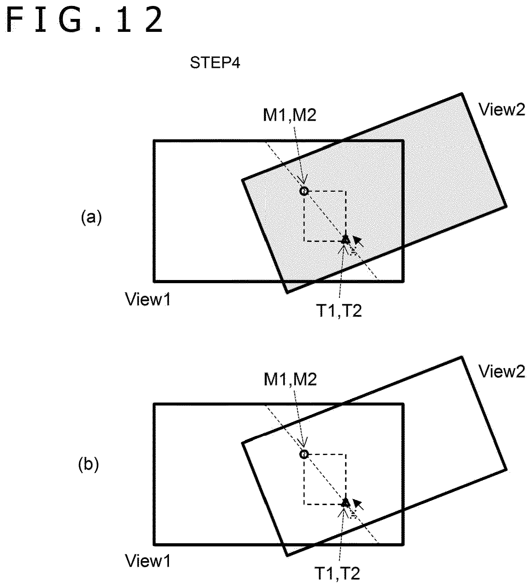

In step 4, adjustments are made to bring the image qualities (luminance, color, and so on) of the view 1 and the view 2 into conformity with each other. In this case, for adjusting luminance, for example, as illustrated in FIG. 12(a), while the master points and the target points are superposed as described above, a rectangular area defined by the master points and the target points is established. Then, respective luminance histograms of the view 1 and the view 2 in the rectangular area are constructed, and adjustments are made to make the histograms equal to each other. FIG. 12(b) illustrates the views 1 and 2 whose luminance has been adjusted. Color adjustments of the views 1 and 2 may be carried out in a similar manner though not described in detail below. Note that both or one of luminance and color adjustments may be made.

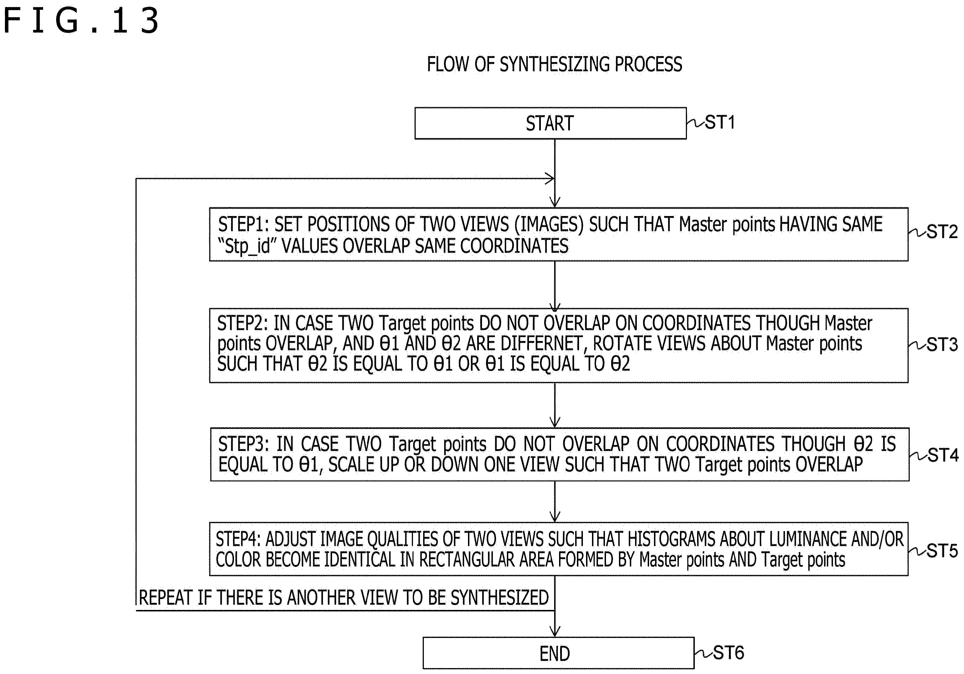

FIG. 13 illustrates a flow of the synthesizing process carried out by the image synthesis/display selector 207. The process starts in step ST1. Then, in step ST2, the positions of the two views (images) having the same value "stp_id" are set such that the master points thereof are superposed at the same coordinates (see FIG. 11(a)).

Next, in step ST3, if the two target points are not superposed at coordinates and θ2 and θ1 are different from each other but the master points are superposed at the same coordinates, either one of the views is rotated about the master points to make θ2 equal to θ1 or to make θ1 equal to θ2 (see FIG. 11(b)).

Then, in step ST4, if the two target points are not superposed at coordinates but θ2 and θ1 are equal to each other, one of the views is scaled down or up to superpose the two target points on each other (see FIG. 11(c)). Next, in step ST5, the image qualities of the two views are adjusted to make luminance and/or color histograms equal to each other in a rectangular area defined by the master points and the target points (see FIG. 12).

If any other views to be synthesized exist, steps ST2 through ST5 described above are repeated as many times as the number of such views. When the synthesis of all the views is finished, the synthesizing process comes to an end in step ST6.

Referring back to FIG. 6, the image synthesis/display selector 207 extracts the image data of an entire area or partial area from the synthesized image data and outputs the extracted image data as display image data according to a display frame size of the display 209 or a user's selection from the user operation unit 201a. For example, if the display frame size of the display 209 is large enough to display the synthesized image in its entirety, then the image synthesis/display selector 207 extracts the image data of the entire area from the synthesized image data and outputs the extracted image data as display image data.

For example, on the other hand, if the display frame size of the display 209 is able to display only a part, e.g., one view, of the synthesized image, then the image synthesis/display selector 207 extracts the image data of a partial area from the synthesized image data and outputs the extracted image data as display image data. At this time, by default, the image synthesis/display selector 207 extracts the image data of an area corresponding to the master view and outputs the extracted image data as display image data.

Furthermore, in the case in which the image synthesis/display selector 207 extracts the image data of a partial area from the synthesized image data and outputs the extracted image data as display image data in this manner, the image synthesis/display selector 207 may change the partial area from which to extract the image data according to a user's selection from the user operation unit 201a, extract the image data from the changed partial area, and output the extracted image data as display image data. The synthesized image may thus be scrolled on the display based on a user's scrolling operation. Alternatively, the areas of the respective views may successively be selected as display areas, rather than being scrolled.

The controller 201 generates UI display data that indicate which position in the synthesized image the image data are being extracted from. In this case, if the image data of the entire area of the synthesized image data are being extracted, then that fact is displayed by the UI display data, indicating that there is no scrollable content. On the other hand, if the image data of a partial area of the synthesized image data are being extracted, then the position where the image data are being extracted is displayed by the UI display data, indicating that there is scrollable content.

The synthesizer 208 synthesizes the display image data generated by the image synthesis/display selector 207 and the UI display data generated by the controller 201 with each other, and sends the synthesized data to the display 209. For example, the display 209 includes an LCD (Liquid Crystal Display) panel, an organic EL (ElectroLuminescence) panel, or the like. Note that the display 209 may be an external device connected to the receiving apparatus 200.

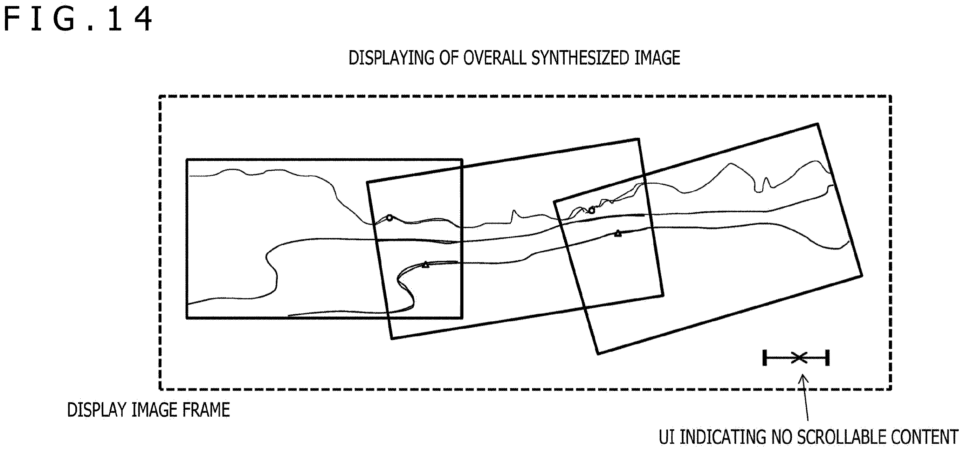

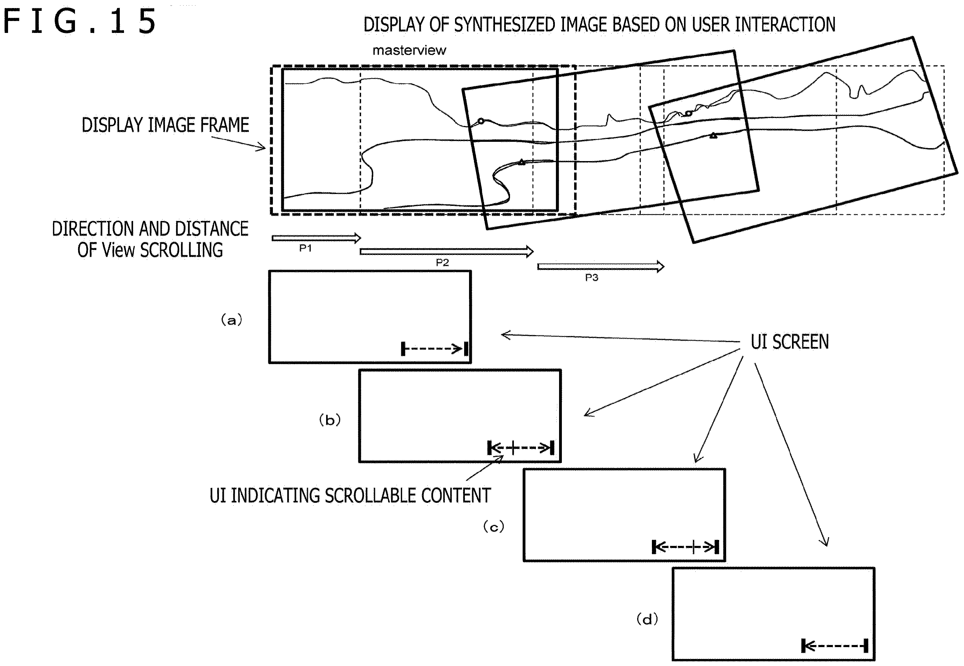

FIG. 14 illustrates by way of example the manner in which an overall synthesized image (synthesis views) is displayed on the display 209. The display 209 displays on its display screen the synthesized image and the UI display data indicating that the overall synthesized image is being displayed, with no scrollable content. FIG. 15 illustrates by way of example the manner in which a partial area of a synthesized image (synthesis view) is displayed based on user interaction. In this case, the display area is scrolled in response to a user's scrolling operation. The display screen displays, in addition to the image of the partial area, the UI display data indicating that a part of the synthesized image is being displayed, together with its position, and that there is scrollable content accompanied by an arrow indicating a direction.

FIG. 15(a) illustrates an example of an UI screen in a display area that displays the area of the master view at the left end of the synthesized image is displayed. The rightward arrow on the UI screen indicates here that the position of the displayed image is at the left end, allowing the display area to be scrolled only to the right. FIG. 15(b) illustrates an example of an UI screen in the display area that has been scrolled to the right by P1. A vertical bar indicates here the relative position of the display area with respect to the entire synthesized image, and arrows directed to the left and right indicate that the display area can be scrolled to the left and right.

FIG. 15(c) illustrates an example of an UI screen in the display area that has further been scrolled to the right by P2. In this case, a vertical bar indicates the relative position of the display area with respect to the entire synthesized image, and arrows directed to the left and right indicate that the display area can be scrolled to the left and right. FIG. 15(d) illustrates an example of an UI screen in the display area that has further been scrolled to the right by P3. In this case, a leftward arrow on the UI screen indicates that the position of the displayed image is at the right end, allowing the display area to be scrolled only to the left.

Operation of the receiving apparatus 200 illustrated in FIG. 6 will briefly be described below. The receiver 202 receives a transport stream TS transmitted from the transmitting apparatus 100, which is carried on a broadcasting wave or Web packets. The transport stream TS is supplied to the TS analyzer 203. In the TS analyzer 203, an encoded stream (encoded image data of each view) included in the transport stream TS is extracted from the transport stream TS. The extracted encoded stream is sent from the TS analyzer 203 to the coded picture buffer 204.

Encoded image data of all views or encoded image data of each view belonging to a set of synthesis views designated by the user from the user operation unit 201a are decoded by the video decoder 205 depending on the decoding capability of the receiving apparatus 200. The set of synthesis views is designated by setting the value of information "tier" to a predetermined value. In this case, the encoded image data of each picture in each view stored in the coded picture buffer 204 are read and decoded by the video decoder 205 at a decoding timing given by the DTS (Decoding Time Stamp) of the picture, respectively.

The image data of each picture in each view which have been obtained by the video decoder 205 are temporarily stored in the decoded picture buffer 206. The image data of each picture are read from the decoded picture buffer 206 at a timing given by the PTS (Presentation Time Stamp) of the picture, producing moving image data VD of each view, which are sent to the image synthesis/display selector 207.

Furthermore, in the video decoder 205, parameter sets and SEI messages inserted in the video stream are extracted and sent to the controller 201. The extracted information also includes a stitching data SEI message (see FIG. 3) inserted in the access unit of the encoded image data of each view. The controller 201 thus recognizes the stitch synthesis information of each view. The stitch synthesis information includes information about synthesis points (master points and target points), view identifying information, master view information, synthesis view set information, etc.

In the image synthesis/display selector 207, the image data of the views obtained from the decoded picture buffer 206 are synthesized into synthesized image data under the control of the controller 201. In the synthesizing process, the image data are synthesized by superposing synthesis points having the same identifying information "stp_id." At this time, the image data are rotated and scaled with respect to the master points as reference points, if necessary, such that the target points are superposed one on the other.

Furthermore, in the image synthesis/display selector 207, the image data of an entire area or partial area from the synthesized image data are extracted and output as display image data according to the display frame size of the display 209 or the user's selection from the user operation unit 201a. The display image data are supplied via the synthesizer 208 to the display 209, which displays an image based on the display image data. In this manner, the image is displayed scalably depending on the display frame size of the display 209.

For example, if the display frame size of the display 209 is large enough to display the synthesized image in its entirety, then the image synthesis/display selector 207 extracts the image data of the entire area from the synthesized image data and outputs the extracted image data as display image data. In this case, therefore, the display 209 displays the synthesized image in its entirety.

For example, on the other hand, if the display frame size of the display 209 is able to display only a part, e.g., one view, of the synthesized image, then the image synthesis/display selector 207 extracts the image data of a partial area from the synthesized image data and outputs the extracted image data as display image data. Therefore, in this case, the display 209 displays a partial area of the synthesized image. By default, since the image synthesis/display selector 207 extracts the image data of an area corresponding to the master view in this case, the display 209 displays an image of the master view.

Furthermore, in this case, when the partial area from which to extract the image data is changed according to a user's selection from the user operation unit 201a, the image synthesis/display selector 207 extracts the image data from the changed partial area, and outputs the extracted image data as display image data. The synthesized image can thus be scrolled on the display based on a user's scrolling operation.

Furthermore, the controller 201 generates UI display data that indicate which position in the synthesized image the image data are being extracted from. The UI display data are synthesized with the display image data by the synthesizer 208. In this case, if the image data of the entire area of the synthesized image data are being extracted, then that fact is displayed by the UI display data, indicating that there is no scrollable content. On the other hand, if the image data of a partial area of the synthesized image data are being extracted, then the position where the image data are being extracted is displayed by the UI display data, indicating that there is scrollable content. The UI display data allow the user to perform a scrolling operation with ease.

In the transmitting and receiving system 10 illustrated in FIG. 1, as described above, the transmitting apparatus 100 inserts information about synthesis points (master points and target points) into encoded image data of each view and transmits the encoded image data with the inserted information. Therefore, the receiving side can synthesize the views based on the information about the synthesis points, and processing burdens thereon can be reduced.

In the transmitting and receiving system 10 illustrated in FIG. 1, furthermore, the transmitting apparatus 100 adds information for identifying a view to each piece of information about synthesis points inserted into encoded image data of each view. Therefore, the receiving side can easily identify each view.

In the transmitting and receiving system 10 illustrated in FIG. 1, moreover, the transmitting apparatus 100 adds information indicating whether a view is a master view or not to each piece of information about synthesis points inserted into encoded image data of each view. Therefore, the receiving side can select an area, of the synthesized image, corresponding to a master view as a partial area to be displayed by default.

In the transmitting and receiving system 10 illustrated in FIG. 1, in addition, the transmitting apparatus 100 adds information indicating a set of synthesis views to each piece of information about synthesis points inserted into encoded image data of each view. Therefore, the receiving side can obtain a desired synthesized image by designating a set of synthesis views.

In the transmitting and receiving system 10 illustrated in FIG. 1, furthermore, the receiving apparatus 200 includes an operation unit that allows the user to manipulate a partial area to be displayed in the synthesized image. Therefore, the user can adjust a display area in the synthesized image as desired. In this case, the receiving apparatus 200 superposes display data indicative of the position of the extracted partial area in the synthesized image, on the display image data. Consequently, the user can easily recognize the position of the display area in the synthesized image, and can scroll the display area smoothly.

### <2. Modifications>

Note that, in the above embodiment, a set of synthesis points includes one master point and one target point. However, a set of synthesis points may include one master point and two or more target points. In such a case, according to the synthesizing process, a view is rotated or scaled (nonlinearly rotated or scaled), if necessary, to superpose the two or more target points one on the other with respect to the master point as a reference point.

Furthermore, in the above embodiment, the transmitting and receiving system 10 having the transmitting apparatus 100 and the receiving apparatus 200 has been illustrated. Transmitting and receiving systems to which the present technology is applicable are not limited to the above configuration. For example, the receiving apparatus 200 may be configured as a set-top box and monitor that are interconnected by a digital interface such as (HDMI (High-Definition Multimedia Interface) or the like, for example. Note that "HDMI" is a registered trademark.

Furthermore, in the above embodiment, the container is illustrated as a transport stream (MPEG-2 TS). The present technology is also applicable to a system where contents are distributed to receiving terminals via a network such as the Internet or the like in a similar manner. On the Internet, contents are frequently distributed by containers according to ISOBMFF (or MP4) or other formats. That is, containers may be of various formats including a transport stream (MPEG-2 TS) employed by digital broadcasting standards and ISOBMFF (or MP4) employed for contents distribution by the Internet.

Furthermore, the present technology may be arranged as follows:
(1) A transmitting apparatus including:
   a transmitter that transmits an encoded stream of encoded image data of a plurality of views that can be synthesized; and
   an information inserter that inserts information about synthesis points into the encoded image data of each of the views.
(2) The transmitting apparatus according to (1), in which the synthesis points include a reference point and a non-reference point to be used upon synthesis.
(3) The transmitting apparatus according to (1) or (2), in which the information about synthesis points is represented by x coordinates and y coordinates with an origin being located at a top-left corner of an image.
(4) The transmitting apparatus according to any one of (1) through (3), in which information identifying each of the views is added to each piece of the information about synthesis points that are inserted into the encoded image data of each of the views.
(5) The transmitting apparatus according to any one of (1) through (4), in which information indicating whether a view is a master view or not is added to each piece of the information about synthesis points that are inserted into the encoded image data of each of the views.
(6) The transmitting apparatus according to any one of (1) through (5), in which information indicating a set of synthesis views is added to each piece of the information about synthesis points that are inserted into the encoded image data of each of the views.
(7) A transmitting method including:
   a transmitting step in which a transmitter transmits an encoded stream of encoded image data of a plurality of views that can be synthesized; and
   an information inserting step in which an information inserter inserts information about synthesis points into the encoded image data of each of the views.
(8) A receiving apparatus including:
   a receiver that receives an encoded stream of encoded image data of a plurality of views that can be synthesized;
   the encoded image data of each of the views having information about synthesis points inserted therein; and
   a synthesizer that synthesizes image data of a predetermined number of views selected from the plurality of views, based on the information about synthesis points, thereby producing synthesized image data.
(9) The receiving apparatus according to (8), in which information indicating a set of synthesis views is added to each piece of the information about synthesis points that are inserted into the encoded image data of each of the views, and
   the synthesizer synthesizes image data of views belonging to a set designated by the designation information indicating the set of synthesis views.
(10) The receiving apparatus according to (8) or (9), further including:
   a display processor that selectively extracts image data of a partial area from the synthesized image data, thereby producing display image data.
(11) The receiving apparatus according to (10), in which information indicating whether a view is a master view or not is added to each piece of the information about synthesis points that are inserted into the encoded image data of each of the views, and
   the display processor extracts image data of an area of the master view from the synthesized image data, thereby producing display image data by default.
(12) The receiving apparatus according to (10) or (11), further including:
   an operation unit that allows a user to manipulate the partial area.
(13) The receiving apparatus according to (12), in which the display processor superposes display data for indicating a position of the extracted partial area in a synthesized image, on the display image data.
(14) A receiving method including:
   a receiving step in which a receiver receives an encoded stream of encoded image data of a plurality of views that can be synthesized,
   the encoded image data of each of the views having information about synthesis points inserted therein; and
   a synthesizing step in which a synthesizer synthesizes image data of a predetermined number of views selected from the plurality of views, based on the information about synthesis points.

The present technology has main features that information about synthesis points (master points and target points) is inserted into encoded image data of each view and the encoded image data with the inserted information are transmitted, and a receiving side is able to synthesize each view based on the information about synthesis points, so that processing burdens on the receiving side are reduced (see FIGS. 2 and 3).

### [Reference Signs List]

- 10: Transmitting and receiving system
- 100: Transmitting apparatus
- 101: Controller
- 102a: User operation unit
- 102b: Display
- 103: Decoded picture buffer
- 104: Video encoder
- 105: Coded picture buffer
- 106: TS formatter
- 107: Transmitter
- 200: Receiving apparatus
- 201: Controller
- 201a: User operation unit
- 202: Receiver
- 203: TS analyzer
- 204: Coded picture buffer
- 205: Video decoder
- 206: Decoded picture buffer
- 207: Image synthesis/display selector
- 208: Synthesizer
- 209: Display

## Claims

1. A transmitting apparatus comprising:
a transmitter that transmits an encoded stream of encoded image data of a plurality of views that can be synthesized; and
an information inserter that inserts information about synthesis points into the encoded image data of each of the views.

2. The transmitting apparatus according to claim 1, wherein the synthesis points include a reference point and a non-reference point to be used upon synthesis.

3. The transmitting apparatus according to claim 1, wherein the information about synthesis points is represented by x coordinates and y coordinates with an origin being located at a top-left corner of an image.

4. The transmitting apparatus according to claim 1, wherein information identifying each of the views is added to each piece of the information about synthesis points that are inserted into the encoded image data of each of the views.

5. The transmitting apparatus according to claim 1, wherein information indicating whether a view is a master view or not is added to each piece of the information about synthesis points that are inserted into the encoded image data of each of the views.

6. The transmitting apparatus according to claim 1, wherein information indicating a set of synthesis views is added to each piece of the information about synthesis points that are inserted into the encoded image data of each of the views.

7. A transmitting method comprising:
a transmitting step in which a transmitter transmits an encoded stream of encoded image data of a plurality of views that can be synthesized; and
an information inserting step in which an information inserter inserts information about synthesis points into the encoded image data of each of the views.

8. A receiving apparatus comprising:
a receiver that receives an encoded stream of encoded image data of a plurality of views that can be synthesized;
the encoded image data of each of the views having information about synthesis points inserted therein; and
a synthesizer that synthesizes image data of a predetermined number of views selected from the plurality of views, based on the information about synthesis points, thereby producing synthesized image data.

9. The receiving apparatus according to claim 8, wherein information indicating a set of synthesis views is added to each piece of the information about synthesis points that are inserted into the encoded image data of each of the views, and
the synthesizer synthesizes image data of views belonging to a set designated by the designation information indicating the set of synthesis views.

10. The receiving apparatus according to claim 8, further comprising:
a display processor that selectively extracts image data of a partial area from the synthesized image data, thereby producing display image data.

11. The receiving apparatus according to claim 10, wherein information indicating whether a view is a master view or not is added to the information about synthesis points that are inserted into the encoded image data of the views, and
the display processor extracts image data of an area of the master view from the synthesized image data, thereby producing display image data by default.

12. The receiving apparatus according to claim 10, further comprising:
an operation unit that allows a user to manipulate the partial area.

13. The receiving apparatus according to claim 12, wherein the display processor superposes display data for indicating a position of the extracted partial area in a synthesized image, on the display image data.

14. A receiving method comprising:
a receiving step in which a receiver receives an encoded stream of encoded image data of a plurality of views that can be synthesized;
the encoded image data of each of the views having information about synthesis points inserted therein; and
a synthesizing step in which a synthesizer synthesizes image data of a predetermined number of views selected from the plurality of views, based on the information about synthesis points.
